# EUROPEAN PATENT APPLICATION

(11) **EP 4 488 322 A1**
(43) Date of publication of application: **08.01.2025**
(21) Application number: 23183384.9
(22) Date of filing: 04.07.2023
(51) Int. Cl.: C08K 5/3492, C08L 7/02

(54) **CURABLE LATEX COMPOSITIONS**

(71) Applicant: Aquaspersions Ltd., Halifax, Yorkshire HX3 6AQ (GB)
(72) Inventor: The designation of the inventor has not yet been filed
(74) Representative: Hepworth Browne

(57) **Abstract**

A curable latex composition comprises:
a latex component selected from nitrile rubber, latex, natural rubber latex and mixtures thereof;
a crosslinking component comprising:
a blocked isocyanate or a water reducible isocyanate,
a metal oxide selected from the group consisting of: zinc oxide, aluminium oxide, ammonium zirconyl carbonate, zirconium oxide, aluminium lactate and aluminium hydroxide and mixtures thereof;
an optional antioxidant component;
an optional filler; and
optional further ingredients.

## Description

This invention relates to curable latex compositions, particularly but not exclusively nitrile rubber, natural rubber or other rubber compositions and to elastomeric products manufactured from such compositions, including latex gloves, and the like.

Traditional disposable latex gloves have been manufactured from natural rubber or nitrile rubber latexes by a vulcanisation process using sulphur, zinc oxide and an accelerator such as dithiocarbamate. However, zinc oxide causes effluent pollution and according to EU Food Contact Regulation 10/2011, specific migration limits for Zn are controlled at 5mg/kg of food or food simulant. Zinc based accelerators are not water soluble and remain in the gloves or other products after manufacture. Accelerator residues may cause type IV allergic reaction. Additionally, by-products such as nitrosamines can be formed which are potentially carcinogenic.

A further disadvantage of existing latex cure compositions is that although zinc oxide provides strength to cause cross linking of compositions, this labile ionic bonding has been found to lack stability in use.

An object of the present invention is to provide curable latex compositions which are free of sulphur and accelerators. The presence of moisture in the film which is solely crosslinked through ionic bonds may weaken the ionic bonds leading to a reduction in film strength and film splitting.

According to a first aspect of the present invention, a curable latex composition comprises:
a latex component selected from: nitrile rubber latex, natural rubber latex, polychloroprene latex, polyisoprene latex and mixtures thereof;
a crosslinking component comprising:
   a blocked isocyanate or a water reducible isocyanate;
   a metal compound selected from the group consisting of: zinc oxide, aluminium oxide, ammonium zirconyl carbonate, zirconium oxide, aluminium lactate, aluminium hydroxide magnesium oxide and mixtures thereof;
   an optional antioxidant component;
   an optional filler; and
   optional further ingredients.

Use of a blocked isocyanate is preferred. The blocked isocyanate may be a blocked polyisocyanate.

In this specification, blocked isocyanates or water-reducible isocyanates may be referred to for brevity as isocyanates.

In embodiments, the latex component is a nitrile latex. Nitrile latices may be manufactured by emulsion polymerisation of acrylonitrile and butadiene. An example is disclosed in US Patent 11179908, the disclosure of which is incorporated by reference into this specification for all purposes.

The amount of the isocyanate may be in the range of 0.01 phr to 0.6 phr, for example 0.05 phr to 0.6 phr, for example 0.1 phr to 0.4 phr, for example 0.2 phr to 0.3 phr.

The amount of the metal compounds may be in the range of 0.1 phr to 1.5 phr, for example 0.4 phr to 0.8 phr.

The abbreviation phr is used to refer to parts by weight per 100 parts of rubber by dry weight.

A blocked isocyanate is an isocyanate or polyisocyanate which has the isocyanate functionality chemically blocked to control reactivity. It may be the product of a reaction of an isocyanate moiety (usually a di-isocyanate or polyisocyanate) and a suitable blocking agent. The blocked isocyanate can be added to materials that would normally react with the isocyanate, so that they do not react at ambient temperature. They are extensively used in industrial applications such as coatings, sealants and adhesives.

The term blocked isocyanate is used in this specification to refer to a combination of an isocyanate or polyisocyanate and a blocking agent, wherein the blocking agent undergoes a reversable reaction with the isocyanate to reduce the reactivity of the isocyanate. The blocking reaction may be reversed by heating to a predetermined temperature in order to restore reactivity of the isocyanate, allowing crosslinking of the composition. See below.

Alternative blocked isocyanates are surface deactivated isocyanates. These compounds comprise materials where the surfaces of solid isocyanate particles are reacted with, for example, an amine or water to form a surface with reduced activity. Such blocked isocyanates may be activated by heating causing the solid particle to soften and become reactive.

Blocked isocyanates and polyisocyanates which may be dissolved or dispersed in or miscible with water are referred to in this specification for brevity as water based isocyanates.. Blocked isocyanates, water emulsifiable blocked isocyanates, water reducible isocyanates or dispersions of surface deactivated polyisocyanates may be employed.

Examples of water based blocked isocyanates include the following compounds.
(1) Blocked isocyanates which have been modified to incorporate hydrophilic groups which render them emulsifiable, dispersible or soluble in water and which can form storage stable emulsions;
(2) Blocked isocyanates which are not hydrophilically modified but which can be emulsified or dispersed by incorporation of a water miscible solvent and/or surfactant;
(3) Blocked isocyanates which are solid at ambient temperature and which can be dispersed in water as a finely divided powder with an additional surfactant. The finely divided powder can be dispersed directly or produced in situ by size reduction process, such as using a ball or bead mill;
(4) Aqueous dispersions of surface deactivated solid isocyanates. Examples are disclosed in US 4849262 and US 2002193534, the disclosures of which are incorporated into this specification by reference for all purposes.

Water reducible isocyanates may also be used. These are hydrophilically modified isocyanate functional materials which are emulsifiable in water. These may be much less stable in aqueous media than blocked isocyanates.

Nitrile butadiene rubber (NBR) in a basic form may be prepared via a free-radical polymerization of butadiene (BD) with acrylonitrile (AN). The reaction medium is typically water with addition of surfactant stabilizers to create an emulsion polymer. Whilst basic NBR may be capable to be crosslinked with sulfur, it does not typically produce the strength and elongation properties needed for barrier protection films. NBR is coagulated to form crumb rubber and is used in applications where resistance against oils and petroleum-based fuels is required (for example hoses, seals and fuel tanks). Major nitrile latexes include Perbunan manufactured by Arlanxeo and Nipol manufactured by Zeon The AN incorporation level in the nitrile polymer will control the level of oil resistance. Higher AN levels will typically result in a stiffer film but with better resistance against oils and nonpolar solvents (for example hexane). AN content can be classified as high (>43%), medium (36-31%) and low (<25%). x-NBR or carboxylated NBR, introduces methacrylic acid (MAA) or acrylic acid (AA) into the monomer mix. The addition of carboxylic acid groups into the polymer chain, allows the possibility of additional crosslinking pathways. Acid monomer levels may typically be in the range from 3-10% in the polymer chain. A typical example of a carboxylated nitrile latex used for dipping operation is the grade 6330 manufactured by Synthomer.

Antioxidants may be included in the composition. These have the effect of preserving the properties of the polymer from the negative effects of oxidation reactions. Antioxidants may be added as single materials or as a combination including mixtures with synergists. Examples of suitable antioxidants include butylated reaction products of p-cresol and dicyclopentadiene, pentaerythritol tetrakis-(3-(3,5-di-tert-butyl-4-hydroxyphenyl) propionate), 4-((4,6-bis(octylthio)-1,3,5-triazin-2-yl)amino)-2,6-di-tert-butylphenol, octadecyl 3-(3,5-di-tert-butyl-4-hydroxyphenyl)propionate, 4,6-bis(octylthiomethyl)-6-methylphenol or tetramethyl dihydroquinoline polymer).

Examples of synergists which may be employed are 4,6-bis(octylthiomethyl)-6-methylphenol, tris(2,4-di-tert-butylphenyl)phosphite and didodecyl 3, 3'-thiopropionate.

Antioxidants and synergists may be added directly or more preferably as an aqueous dispersion or emulsion.

The ingredients of the composition can be added separately or combined prior to mixing with the polymer latex.

Polyisocyanates which may be employed in this invention are those known in the art and may be selected from the group consisting of:
diphenylmethane diisocyanate (MDI), toluene diisocyanate (TDI), hexamethylene diisocyanate (HDI), isophorone diisocyanate (IPDI)) 4-4'-diisocyanato dicyclohxylmethane (H12MDI) tetramethylxylylene diisocyanate (TMXDI), including dimers (uretdione), trimers (isocyanurates), biurets and alophonates thereof and adducts of the diisocyanates with diols and triols.

An exemplary water-based isocyanate blocking agent is 3,5-dimethyl pyrazole (3,5-DMP). Further blocking agents include butanone oxime, also known as methyl ethyl ketoxime [MEKO], epsilon-caprolactam [ε-Cap], diethylmalonate (DEM), or phenols including for example alkylphenols, cardanol, vanillin and amines such as diisopropylamine. Further blocking agents include triazole, ethyl imadizole, 3,5-di-t-butyl pyrazole and butylbenzylamine.

Blocked polyisocyanates may be prepared by known methods or are commercially available. They can be solvent based, 100% active (that is not water or solvent based) or water based, that is aqueous emulsions or dispersions of blocked isocyanates.

Examples of commercially available water based blocked polyisocyanates include the Trixene Aqua range from Lanxess; Imprafix, Impranil, Baybond and Bayhydur ranges from Covestro; Aqualink X from Aquaspersions. These materials are hydrophilically modified isocyanates, based on the isocyanurates of hexamethylene diisocyanate (HDI), the biuret of HDI or the isocyanurate of isophorone diisocyanate (IPDI). These may be hydrophilically modified by reacting one of the isocyanate moieties with a hydroxyfunctional carboxylic acid, and blocking the remaining moieties with 3,5-DMP or other blocking agent such as ε-caprolactam, the carboxylic acid moiety being neutralised with for example, an amine such as triethylamine. Alternatively, the carboxylic acid may be replaced by a low molecular weight polyethylene oxide polymer of less than 10 monomer units.

A further example is an adduct of IPDI and low molecular weight triol in which the isocyanate moieties are capped with bisulphite, simultaneously blocking and rendering the material water emulsifiable, for example Synthapret BAP from Tanatex.

A further example of a water based blocked isocyanate is Kagebond D50 (from Isochem Kautchuck). This comprises ε-caprolactam blocked MDI dispersed in water.

Examples of solvent based blocked isocyanates which may be emulsified with additional surfactant are: Trixene BI 7982 from Lanxess. This is an HDI trimer blocked with 3,5 DMP in methoxypropanol solvent; Trixene BI 7960, from Lanxess, HDI Biuret blocked with 3,5-DMP in methoxypropanol solvent; Tolonate D2 from Vencorex. This is HDI trimer blocked with MEKO in an aromatic hydrocarbon solvent, Desmodur PL350 from Covestro which is an HDI trimer blocked with DMP in methoxypropyl acetate/aromatic hydrocarbon solvent. Desmodur BL3175 from Covestro which is HDI trimer blocked with MEKO in an aromatic hydrocarbon solvent.

An example of solid blocked isocyanates which may be dispersed are as follows: Vestagon B1400 from Evonik, a linear IPDI prepolymer blocked with ε-caprolactam.

Examples of aqueous dispersions of surface deactivated polyisocyanates are: Aqualink D-HT from Aquaspersions; which is IPDI trimer deactivated with polyamine and dispersed in water; Aqualink U-HT; from Aquaspersions, which is TDI dimer deactivated with polyamine and dispersed in water.

One or more fillers may be included in the composition, for example calcium carbonate, clay, aluminate silicate or silica. An amount of 10 to 100 phr may be employed.

Compositions in accordance with this invention provide numerous advantages in comparison to previously disclosed compositions. The compositions and products made from the compositions may be free of crosslinking agents such as sulphur and may have a reduced content of metal oxides such as zinc oxide, ammonium, zirconyl carbonate, zirconium oxide aluminium lactate and aluminium hydroxide. The strength of the composition may be improved. Without wishing to be bound by theory, it is believed that the isocyanate crosslinking agents of this invention form covalent bonds which are stronger than the ionic bonds obtained using zinc oxide crosslinking.

The compositions of the present invention may be used for manufacture of disposable gloves, for example medical, surgical or laboratory gloves, condoms, balloons, teats and other articles commonly made from elastomeric rubber compositions.

Percentages and other quantities referred to in the specification are by weight unless indicated otherwise and are selected from any ranges quoted to total 100%.

The invention is further described by means of examples but not in any limitative sense.

### Example 1 (Latex Compounding)

The pH of the incoming latex was measured. A latex stabiliser, sodium dodecyl benzene sulphonate solution, (0.3 phr) was added and the mixture was stirred for 15 minutes. A pH adjuster, potassium hydroxide, was added until the latex reached pH 10.

The following ingredients were employed. The abbreviation phr refers to parts per 100 parts rubber by dry weight.

| Chemical | phr | Wet formulation (kg) | Amount to add (kg) |
|---|---|---|---|
| 45% latex (6330 from Synthomer ) | 100 | 222.22 | 500.00 |
| 25% sodium dodecyl benzene sulphonate | 0.3 | 1.20 | 2.70 |
| 10% KOH | 1.7 | 17.00 | 38.25 |
| 38% Aqualink X | 0.3 | 0.79 | 1.78 |
| 60% zinc oxide | 0.7 | 1.17 | 2.63 |
| 50% antioxidant | 0.2 | 0.40 | 0.90 |

Blocked isocyanate (38% Aqualink X 0.3phr) was diluted to a 1:1 ratio with water and added to the pH adjusted latex. The mixture was stirred for 5-10 minutes. Zinc oxide (0.70 phr) was diluted with water, 1:1 ratio by weight. The diluted zinc oxide dispersion was added to the pH adjusted latex. The compound was stirred for 5-10 minutes. Antioxidant, Wingstay L (0.2 phr) was diluted with water 1:1 ratio and added to the antioxidant dispersion and pH adjusted latex mixture. The latex was further diluted to provide gloves having the desired thickness. The pH of the final compounded latex was checked and adjusted if necessary to pH 10 or above using potassium hydroxide solution. The latex was stirred for 18 to 24 hours for maturation at a speed of 80 rpm using a low shear stirrer. The compounded latex was passed through a 200 mesh sieve to remove any solid particles.

### Example 2 (Dipping Process)

Glove shaped formers were dipped into a calcium nitrate solution coagulant at a temperature of 55°C to 60°C. The coated formers were dried and maintained at a temperature of 60°C to 65°C. The coated formers were dipped into a latex composition prepared according to Example 1 to obtain the desired weight and thickness of coating. The latex coated formers were passed through a gelling oven at 60°C and then to a beading station. The coated formers were immersed in a pre-leaching tank at 60°C for 1 minute and were then placed in a curing oven at a temperature of 120°C for 30 to 40 minutes. After curing the formers with the gloves on them were immersed in a post leaching bath at a temperature of 60°C for 1 to 2 minutes. After leaching, the formers with the gloves on were passed to a surface treatment process if necessary. The dried formers with the gloves on were then dried in an oven at a temperature at 80°C to 90°C. After drying, the gloves were stripped from the formers, tumbled and conditioned for 16 hours prior to physical testing.

The following parameters were employed.

| Dipping Parameter | |
|---|---|
| Total solid content (TSC %) | 15.0 |
| Coagulant calcium nitrate (%) | 10.0 |
| Dwelling time (sec) | 7 - 4 - 5 |
| Thickness (mm) | 0.06 - 0.065 |

The processing conditions may be adjusted depending upon the production line equipment and materials being processed.

### Example 3 (Durability Test)

Durability tests were performed using conventional methods.

The following results were obtained.

| Compound name | Duration of sample immersed in sweat solution (Hours) | Control (No soak) | 1 hour | 2 hours | 3 hours | 4 hours | 5 hours |
|---|---|---|---|---|---|---|---|
| (A) 0.3 phr Aqualink X | Thickness (mm) | 0.064 | 0.06 | 0.06 | 0.061 | 0.06 | 0.062 |
| | Tensile strength (MPa) | 10.141 | 10.89 | 10.32 | 7.75 | 8.66 | 7.48 |
| | Elongation at break (%) | 915 | 850 | 1043 | 1141 | 1049 | 1074 |
| | Modulus of elasticity, 300% elongation (MPa) | 1.33 | 1.27 | 1.22 | 1.1 | 1.1 | 1.16 |
| | Modulus of elasticity, 500% elongation (MPa) | 1.82 | 1.56 | 1.55 | 1.32 | 1.37 | 1.45 |
| (B) 0.5 phr Aqualink X | Thickness (mm) | 0.058 | 0.062 | 0.06 | 0.06 | 0.059 | 0.06 |
| | Tensile strength (MPa) | 12.46 | 14.61 | 11.5 | 7.62 | 6.40 | 6.4 |
| | Elongation at break (%) | 760 | 969 | 1105 | 1144 | 710 | 1030 |
| | Modulus of elasticity, 300% elongation (MPa) | 1.47 | 1.33 | 1.15 | 0.94 | 1.35 | 1.13 |
| | Modulus of elasticity, 500% elongation (MPa) | 2.65 | 1.79 | 1.39 | 1.08 | 2.25 | 1.4 |

| Compound name | Duration of sample immersed in artificial sweat solution (Hours) | Control (No soak) | 1 hour | 2 hours | 3 hours | 4 hours | 5 hours |
|---|---|---|---|---|---|---|---|
| (C) 0.3 phr Aqualink X + 0.7 phr ZnO | Thickness (mm) | 0.064 | 0.06 | 0.062 | 0.062 | 0.06 | 0.062 |
| | Tensile strength (MPa) | 23.91 | 23.59 | 17.66 | 17.52 | 16.21 | 10.42 |
| | Elongation at break (%) | 731 | 746 | 760 | 820 | 806 | 686 |
| | Modulus of elasticity, 300% elongation (MPa) | 2.74 | 2.09 | 1.84 | 1.7 | 1.81 | 1.66 |
| | Modulus of elasticity, 500% elongation (MPa) | 5.15 | 3.87 | 3.06 | 2.62 | 2.92 | 2.91 |
| (D) 0.3 phr Aqualink X + 0.7 phr ZnO + 0.2 phr antioxidant | Thickness (mm) | 0.064 | 0.063 | 0.06 | 0.06 | 0.06 | 0.06 |
| | Tensile strength (MPa) | 23.86 | 18.36 | 23.59 | 18.26 | 21.2 | 18.23 |
| | Elongation at break (%) | 727 | 633 | 845 | 881 | 832 | 846 |
| | Modulus of elasticity, 300% elongation (MPa) | 2.49 | 2.85 | 1.66 | 1.52 | 1.71 | 1.69 |
| | Modulus of elasticity, 500% elongation (MPa) | 4.73 | 6.73 | 2.68 | 2.27 | 2.73 | 2.61 |

### Comparative Examples

| Compound name | Duration of sample immersed in artificial sweat solution (Hours) | Control (No soak) | 1 hour | 2 hours | 3 hours | 4 hours | 5 hours |
|---|---|---|---|---|---|---|---|
| (E) + ZnO/S/ accelerator Total phr: 3.2 | Thickness (mm) | 0.062 | 0.06 | 0.062 | 0.058 | 0.06 | 0.06 |
| | Tensile strength (MPa) | 26.94 | 20.98 | 22.07 | 22.99 | 23.98 | 21.47 |
| | Elongation at break (%) | 612 | 616 | 621 | 548 | 613 | 701 |
| | Modulus of elasticity, 300% elongation (MPa) | 4.23 | 3.72 | 3.31 | 4.30 | 3.09 | 2.26 |
| | Modulus of elasticity, 500% elongation (MPa) | 10.89 | 8.62 | 8.16 | 14.72 | 8.99 | 4.72 |
| (F) + 0.7 phr ZnO | Thickness (mm) | 0.06 | 0.062 | 0.06 | Film break after soak | Film break after soak | Film break after soak |
| | Tensile strength (MPa) | 17.3 | 3.7 | 6.84 | | | |
| | Elongation at break (%) | 699 | 616 | 998 | | | |
| | Modulus of elasticity, 300% elongation (MPa) | 2.28 | 1.52 | 1.05 | | | |
| | Modulus of elasticity, 500% elongation (MPa) | 4.45 | 2.07 | 1.34 | | | |

The accelerator composite employed is a proprietary blend of sulfur, zinc oxide and zinc based accelerators.

The latex used is 6330 supplied by Synthomer.

The antioxidant is a blend of butylated reaction products of p-cresol and dicyclopentadiene (Wingstay L) and didodecyl 3, 3'-thiopropionate.

No defects were observed in samples A through E during visual inspection. Sample F, however exhibited breakdown after three hours of soaking during the test. The films compounded with Aqualink alone, on the other hand did not demonstrate any film breakage during the experiment, unlike sample F.

The tensile strengths of Samples D, E and F were compared.

| Sample | Hours soaked | Control (No soak) | 1 hour | 2 hours | 3 hours | 4 hours | 5 hours |
|---|---|---|---|---|---|---|---|
| (D) 0.3 phr Aqualink X + 0.7 phr ZnO + 0.2 phr antioxidant | Tensile strength (MPa) | 23.86 | 27.02 | 23.59 | 18.26 | 21.2 | 18.23 |
| (F) + 0.7 phr ZnO | Tensile strength (MPa) | 17.3 | 3.7 | 6.84 | Film break after soaking | | |
| (E)(+ ZnO/S/ accelerator composite | Tensile strength (MPa) | 26.94 | 20.98 | 22.07 | 27.69 | 23.98 | 21.47 |
| Total phr: 3.2 | | | | | | | |

From the results obtained it was evident that sample D did not deteriorate. During tests, sample F deteriorated during testing. Moreover, the tensile strength of Sample D was comparable to traditionally cured sample E.

The results of Sample D remained within the specifications of the ASTM standard, having a minimum tensile strength of 14 MPa (ASTM D 6319).

Samples A and B with only Aqualink X showed that the presence of the blocked isocyanate contributed to formulation of a stronger film which did not break down during the soaking process. In comparison, Sample F did break down.

The addition of antioxidant to this combination of blocked isocyanate and zinc oxide resulted in superior durability, showing that the antioxidant also helped to enhance film strength.

## Claims

1. A curable latex composition comprising:
a latex component selected from nitrile rubber, latex, natural rubber latex and mixtures thereof;
a crosslinking component comprising:
a blocked isocyanate or a water reducible isocyanate,
a metal oxide selected from the group consisting of: zinc oxide, aluminium oxide, ammonium zirconyl carbonate, zirconium oxide, aluminium lactate and aluminium hydroxide and mixtures thereof;
an optional antioxidant component;
an optional filler; and
optional further ingredients.

2. A composition as claimed in claim 1, wherein the amount of blocked isocyanate or water reducible isocyanate is in the range 0.01 phr to 0.6 phr.

3. A composition as claimed in claim 2, wherein the amount of isocyanate is in the range 0.1 phr to 0.4 phr.

4. A composition as claimed in claim 3, wherein the amount of isocyanate is in the range 0.2 phr to 0.3 phr.

5. A composition as claimed in any preceding claim, wherein the amount of metal compounds is in the range 0.1 phr to 1.5 phr.

6. A composition as claimed in claim 5, wherein the amount of metal compounds is in the range 0.4 phr to 0.8 phr.

7. A composition as claimed in any preceding claim, wherein the isocyanate is a polyisocyanate.

8. A composition as claimed in any preceding claim, wherein the metal compound is selected from zinc oxide, aluminium oxide, zirconium oxide, magnesium oxide and mixtures thereof.

9. A composition as claimed in any preceding claim, wherein the antioxidant is Wingstay L.

10. A composition as claimed in any preceding claim, wherein the isocyanate is emulsified or dispersed.

11. A composition as claimed in any preceding claim, comprising an antioxidant and a synergist.

12. A composition as claimed in claim 11, wherein the synergist is selected from: 4,6-bis(octylthiomethyl)-6-methylphenol, tris(2,4-di-tert-butylphenyl)phosphite and didodecyl 3, 3'-thiopropionate.

13. A method of manufacture of a cured latex article comprising the steps of: preparing a curable latex composition as claimed in any preceding claim;
applying the composition to a former to form a coated former;
heating the coated former to cure the composition, to form an article on the former and removing the article from the former.

14. A latex article comprising a cured latex composition as claimed in any of claims 1 to 12.

15. A latex article as claimed in claim 14 wherein the article is a glove, condom, teet or soother balloon.
